# EUROPEAN PATENT SPECIFICATION

(11) **EP 0 341 711 B1**
(45) Date of publication and mention of the grant of the patent: **20.03.1996**
(21) Application number: 89108480.8
(22) Date of filing: 11.05.1989
(51) Int. Cl.: G06F 13/36

(54) **Fair arbitration scheme**
Unparteiisches Arbitrierungsschema
Schéma d'arbitrage équitable

(30) Priority: 11.05.1988 US 192649
(43) Date of publication of application: 15.11.1989
(73) Proprietor: DIGITAL EQUIPMENT CORPORATION, Maynard Massachusetts 01754-1418 (US)
(72) Inventor: Frame, Robert C., Massachusetts 01581 (US); Zayas, Fernando A., Massachusetts 01775 (US)
(74) Representative: Betten & Resch

(56) References cited:
- FR-A- 2 482 745
- US-A- 4 456 956
- PATENT ABSTRACTS OF JAPAN, vol. 7, no. 270 (P-240)[1415] 2 December 1983 & JP-A-58 149 531

## Description

### Field of the Invention

The present invention relates to the field of interconnect buses for computers and more particularly, to a fair arbitration scheme for determining which of a plurality of nodes attached to the bus may take control of the bus.

### Background of the Invention

In an arrangement in which a plurality of nodes are connected to a common bus, some kind of scheme is needed to select which node will be able to use the bus at any given time. One scheme which has been used in prior systems is to assign a fixed priority to each of the nodes connected to the bus so that if two of the nodes desire to use the bus at the same time, the node having the higher priority will win every time. The advantage of using a fixed priority is that the nodes which need to use the bus the most have the most opportunity to do so. The scheme has an inherent disadvantage in that the higher priority nodes can effectively monopolize the use of the bus so that lower priority nodes may never have the opportunity to use the bus.

Another scheme which has been used in the past is a round robin arbitration. Each node is sequentially enabled in round robin fashion so that there is an equal sharing of the bus between the nodes. Although this provides equal access to all of the nodes, the scheme can be inefficient since nodes which need to use the bus more often than other modes have to wait for the round robin to complete before being able to use the bus again. However, the nodes which use the bus less frequently are less likely to actually use the bus during their turn, so there is often a waste of the time reserved for nodes which use the bus less frequently.

Publication by El-Gohary et al.: "Method and Apparatus for Controlled Access of a Network Transmission Bus Between a Plurality of Spaced Apart Computer Stations", U.S. Patent No. 4,456,956, teaches a computer system which implements a method of passing control over a bi-directional bus between a plurality of computer stations coupled to the bus. In the described computer system, access to the bus is controlled by the computer stations themselves through an adapter unit located at each computer station. In the described system, during election mode, the adapter unit with the highest priority will always be the winner of the election process. El-Gohary et al. makes no distinction between live adapters with messages to send and live adapters without messages to send as all live adapter units participate in the arbitration process. Accordingly, the arbitration scheme in the El-Gohary et al. patent requires control of the bus to be passed to adapter units, in numerical sequence, even when the live units do not have messages to send thus resulting in wasted bus bandwidth whenever an adapter without a message to send is given control of the bus during the arbitration process.

Also, publication by Yokogawa Denki Seisakusho K.K. and Toshio Ogawa: "Controlling Method of Bus Use Right", Patent Abstracts of Japan, vol. 7, no. 270 (P-240) [1415], corresponding to JP-A-58 149 531, discloses a method of controlling bus use wherein one bus use signal line is connected in common to plural devices having a common bus.

### Summary of the Invention

It is therefore an objective of the present invention to provide a fair arbitration scheme in which all of the nodes connected to a bus have an equal opportunity to use the bus, but without the inefficiencies created by reserving time for each node to use the bus.

This and other objectives are achieved by the present invention by the provision of a method as claimed in claim 1. Further embodiments are disclosed in claims 2 to 11.

According to the present invention there is provided a bus system as claimed in claim 12 and a computer system as claimed in claim 13.

### Brief Description of the Drawings

Figure 1 shows a block diagram of the present invention.

Figure 2 is a phase diagram showing the various phases of the bus of Figure 1 according to the present invention.

### Detailed Description

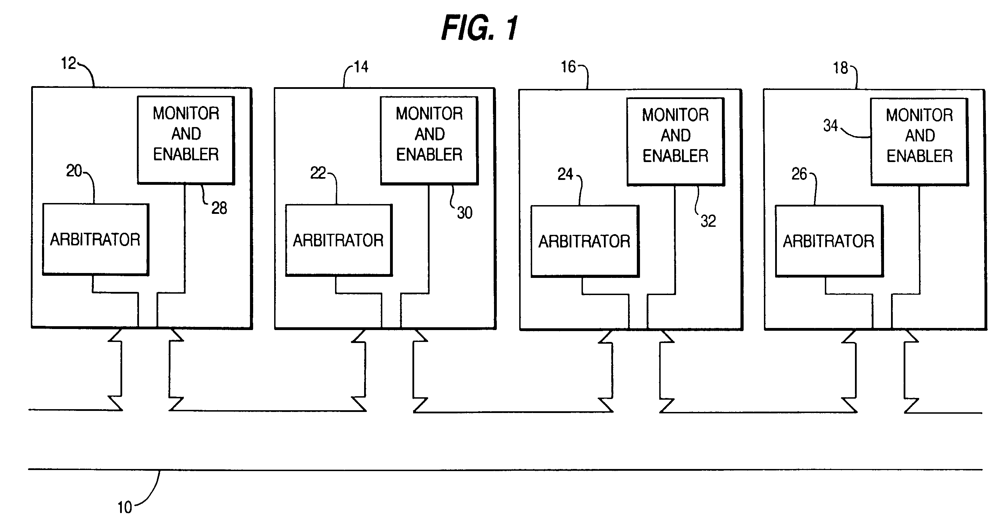

An embodiment of the present invention is illustrated in Figure 1, in which a storage interconnect bus 10 is connected to four nodes 12, 14, 16 and 18. These nodes 12-18 can be different types of devices, such as central processing units, peripheral memory storage units, etc. Although four nodes are shown in this exemplary embodiment, different numbers of nodes can be used without departing from the scope of the invention.

Each of the nodes 12, 14, 16 and 18 includes an arbitrator 20, 22, 24 and 26 and a monitor and enabler unit 28, 30, 32 and 34. Each of the nodes 12, 14, 16 and 18 is assigned a priority, which fixes the priority of the nodes for arbitration purposes. In the illustrated example, node 12 has the highest priority, node 14 the next lower, node 16 the next lower and node 18 the lowest priority. Thus, during an arbitration in which node 12 and node 16 are both attempting to use the bus 10, node 12 will win because it is the higher priority node.

The present invention overcomes the disadvantages of the prior art fixed priority and round robin arbitration schemes discussed above by the use of a fair arbitration scheme. The invention implements the fair arbitration scheme by enabling and disabling the nodes 12, 14, 16 and 18 for purposes of arbitration. Basically, only enabled nodes can participate in arbitration for the bus, and once a node wins an arbitration and takes control of the bus 10, the node becomes disabled and cannot participate in an arbitration until all of the other enabled nodes connected to the bus have had an opportunity to use the bus.

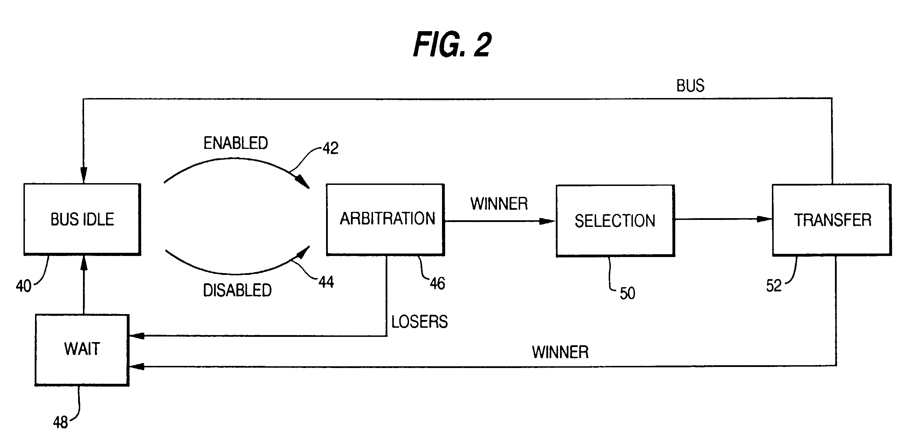

The operation of the fair arbitration scheme of the present invention will be described using the state diagram of Figure 2. Initially, it is assumed that all of the enable flags of the nodes 12-18 are set so that all of the nodes 12-18 are enabled and able to participate in arbitration. Nodes 12-18 continuously monitor the state of the bus 10 with the monitor and enabler units 28, 30, 32 and 34. Since we have started our example from the beginning of operation, the bus will be in a bus idle state as shown by box 40. This state is detected by each of the monitor and enabler units 28-34. The enabled nodes 12-18 assert a bus busy signal and their priority when they have a need to use the bus 10, i.e. when an enabled node wants to have a transfer of information with another node, so that these are now enabled message nodes. For now, it is assumed that only enabled nodes 12 and 16 have a need to use the bus. Since both of the nodes 12 and 16 are enabled message nodes, the phase of the bus 10 follows along an enabled path 42, which in the described embodiment takes 800 nsec (t₁), to the arbitration block 46. The other devices 14 and 18 have not asserted their busy signal and priority will continue monitoring the bus which is no longer idle due to the busy signals asserted by nodes 12 and 16.

In the arbitration block 46, the nodes 12-18 determine which of the nodes 12 and 16 wins the control of the bus 10. This is done by comparing in the arbitrators 20-26 the priority asserted by the nodes 12 and 16. Since node 12 has a higher priority, it is the winner of the arbitration and takes control of the bus 10 which now enters the selection phase block 50. All the losers of the arbitration (in this case node 16) enter a wait phase 48 and monitor the bus 10 for the bus idle condition to re-appear.

The winner of the arbitration, node 12, clears its own enable flag upon winning the arbitration so that the node 12 will be disabled from arbitrating until it becomes enabled. Although it is now disabled for purposes of arbitration, node 12 continues to proceed with a selection and transfer process over the bus 10. When the bus enters the selection phase 50, node 12 selects another node, i.e. a target node, for a transfer of data. The bus 10 then enters the transfer phase 52 and node 12 receives a transfer from the target node. Regardless of the success of the transfer, the now disabled node 12 will enter the wait phase 48 if it has a message to send, i.e. is a disabled message node.

Now assume that the now disabled message node 12 and enabled nodes 14 and 16 ali desire to take control of the bus 10. Upon a bus idle condition being detected for 800 nsec (t₁), the arbitration phase 46 is entered by nodes 14 and 16. Node 12, which is disabled, must wait until the bus is idle for a longer time span t₂ (shown by path 44, in the example 1600 nsec), before again becoming enabled to enter arbitration. The two nodes 14 and 16 (the enabled message nodes) arbitrate as described before after the first time period t₁, with node 14 winning the arbitration. After the transfer involving node 14 has been completed, it too is disabled and must wait until the bus is idle for 1600 nsec (t₂) before it is enabled again. However, the bus will not be idle for this longer time span since the enabled message node 16 will enter into arbitration after the bus is idle for 800 nsec (t₁). Since there are no other higher priority enabled nodes which desire to control the bus, node 16 wins with the transfer operating as described above.

At this point in the example, the three nodes 12-16 are all disabled, while node 18 is enabled. If node 18 needed to take control of the bus, it could do so after node 16 completes its transfer and the bus 10 is idle again for the first time period t₁. However, assume that the node 18 does not need to take control of the bus at this time. All of the devices 12-18 continue to monitor the bus and since no enabled node has taken control of the bus after the bus idle condition has been detected for a period of 1600 nsec (t₂), all the disabled nodes 12-16 once again become enabled and therefore are able to participate in an arbitration. The operation of the bus then proceeds again as described above.

As one can see, if all of the devices are enabled and want to take control of the bus, the fair arbitration scheme acts as a pure round robin scheme since the highest priority nodes will be disabled in turn after they control the bus, until each of the nodes has had an opportunity to take control of the bus. The fair arbitration scheme is more efficient, however, since nodes which use the bus more frequently are not forced to wait through time periods reserved for nodes which do not wish to take control of the bus.

## Claims

1. A method for selecting a particular node from a plurality of nodes coupled to a bus, each node having a predetermined priority, to allow said particular node to use the bus, and for enabling the plurality of nodes after each of the nodes has had an opportunity to use the bus to allow a subsequent selection of a particular node, said method comprising the steps of:
a. enabling for arbitration each of said nodes (12,14,16,18) having a message to send on the bus (10), wherein such enabling is performed by each node (12,14,16,18) itself;
b. monitoring the bus (10) for a bus idle condition;
c. determining which of said nodes (12,14,16,18) are enabled message nodes;
d. arbitrating between said enabled message nodes after the bus (10) has been in a bus idle condition for a first period of time, to select the enabled message node having a highest pre-determined priority among said enabled message nodes to use the bus;
e. disabling said selected enabled message node from arbitration, wherein such disabling is performed by each selected enabled message node itself;
f. repeating steps b, c, d and e until all said enabled message nodes have been disabled from arbitration; and
g. thereafter enabling all said nodes (12,14,16,18) for arbitration when the bus has been in a bus idle condition for a second period of time which is longer than the first period of time, while the plurality of nodes and said bus are running and stable.

2. The method of claim 1, further comprising the step of monitoring time elapsed after the bus enters into the bus idle condition.

3. The method of claim 1, wherein step (a) includes the step of setting an internal enable flag in each said node.

4. The method of claim 3, wherein step (e) includes the step of clearing said internal enable flag of said selected enabled message node.

5. The method of claim 4, wherein step (c) includes determining which of said enabled nodes have asserted a busy signal which indicates said enabled node has a message to send.

6. The method of claim 1, wherein step (d) includes comparing a priority asserted by each said enabled message node, and selecting said enabled message node which has asserted a highest priority.

7. The method of claim 1, wherein step (a) includes the step of setting an internal enable flag in each said node.

8. The method of claim 7, wherein step (e) includes the step of clearing said internal enable flag of said selected enabled message node.

9. The method of claim 1, wherein step (c) includes determining which of said enabled nodes have asserted a busy signal which indicates said enabled node has a message to send.

10. The method of claim 1, wherein step (d) includes comparing a priority identification bit asserted by each said enabled message node, and selecting an enabled message node which has asserted a corresponding priority identification bit that has a highest priority among the asserted priority identification bits.

11. The method of claim 1, wherein said first period of time is approximately 800 nsec, and said second period of time is approximately 1600 nsec.

12. An apparatus for implementing decentralized arbitration in a bus system, having a bus (10) and a plurality of nodes (12,14, 16,18) coupled to the bus, each node having a predetermined priority, the apparatus comprising a plurality of arbitration devices (20,22,24,26), one provided for each node (12,14,16,18) and coupled to the bus (10), each device comprising:
means for self-enabling the node corresponding to the arbitration device for arbitration;
means for monitoring the bus (10) to detect a bus idle condition and for measuring an amount of time elapsed after the bus enters into the bus idle condition;
means for determining whether the node (12,14,16,18) corresponding to the arbitration device (20,22,24,26) is an enabled message node, an enabled message node being an enabled node that has a message to send on the bus (10);
means for interacting with other arbitration devices when the node corresponding to the arbitration device is an enabled message node to arbitrate and select an enabled message node after the bus (10) is in the bus idle condition for a first period of time, such that the enabled message node having a highest pre-determined priority among the enabled message nodes is selected to use the bus (10); and
means for self-disabling the node corresponding to the arbitration device from arbitration once the node is selected;
said means for enabling being responsive to the bus being in an idle condition for a second period of time which is longer than the first period of time to enable the node corresponding to the arbitration device for arbitration, while the plurality of nodes and said bus are running and stable.

13. A computer system comprising:
(a) a bus (10);
(b) a plurality of nodes (12,14,16,18) coupled to the bus;
(c) each one of said plurality of nodes (12,14,16,18) comprising:
(i) an enabler (28,30,32,34) to controllably enable and disable the node for arbitration, said enabler enabling said node if said node has a message to send on the bus;
(ii) a monitor (28,30,32,34) to monitor the bus (10) for a bus idle condition; and
(iii) an arbitrator (20,22,24,26), responsive to said monitor indicating a bus idle condition subsisting on the bus for a first period of time, to determine if
1) the node is enabled for arbitration, and,
2) the node has a highest predetermined priority among all enabled nodes coupled to the bus and seeking to send a message on the bus (10);
(iv) the arbitrator being adapted to take control of the bus (10) when the node has the highest predetermined priority, is enabled for arbitration and has a message to send on the bus (10);
(v) the enabler operating to disable the node from arbitration in the event that the node takes control of the bus;
(vi) the monitor indicating when a bus idle condition has subsisted on the bus for a second period of time, the second period of time being longer than the first period of time; and
(vii) the enabler being responsive to an indication of the second period of time to enable the node for arbitration.

## Patentansprüche

1. Verfahren zur Auswahl eines bestimmten Knotens aus einer Vielzahl von mit einem Bus gekoppelten Knoten, wobei jeder Knoten eine vorgegebene Priorität aufweist, um dem bestimmten Bus die Benutzung des Busses zu ermöglichen, und um die Vielzahl von Knoten freizugeben, nachdem jeder Knoten die Gelegenheit hatte, den Bus zu benutzen, um eine nachfolgende Auswahl eines bestimmten Knotens zu ermöglichen, wobei das Verfahren folgende Schritte aufweist:
a. Freigabe jedes Knotens (12, 14, 16, 18), der eine Nachricht an den Bus (10) senden möchte, für die Arbitration, wobei diese Freigabe von jedem Knoten (12,144,16,18) selbst durchgeführt wird;
b. Überwachung des Busses (10) im Hinblick auf einen Bus-Freizustand;
c. Ermitteln, welche Knoten (12, 14, 16, 18) freigegebene Nachrichten-Knoten sind;
d. Arbitration zwischen den freigegebenen Nachrichten-Knoten, nachdem sich der Bus (10) über einen ersten Zeitraum hinweg in einem Bus-Freizustand befunden hat, um den freigegebenen Nachrichten-Knoten zur Benutzung des Busses auszuwählen, der unter den freigegebenen Nachrichten-Knoten die höchste vorher festgelegte Priorität aufweist;
e. Sperren des ausgewählten, freigegebenen Nachrichten-Knotens für die Arbitration, wobei dieses Sperren von jedem ausgewählten freigegebenen Nachrichten-Knoten selbst durchgeführt wird;
f. Wiederholen der Schritte b, c, d und e solange, bis alle freigegebenen Nachrichten-Knoten für die Arbitration gesperrt worden sind; und
g. anschließende Freigabe aller Knoten (12, 14, 16, 18) für die Arbitration, wenn sich der Bus über einen zweiten Zeitraum hinweg, der länger ist als der erste Zeitraum, in einem Bus-Freizustand befunden hat, während die Vielzahl der Knoten sowie der Bus aktiv und stabil sind.

2. Verfahren nach Anspruch 1, das weiterhin den Schritt aufweist, die Zeit zu überwachen, die verstrichen ist, nachdem der Bus in den Bus-Freizustand eingetreten ist.

3. Verfahren nach Anspruch 1, bei dem der Schritt (a) den Schritt beinhaltet, in jedem Knoten ein internes Freigabe-Kennzeichenbit zu setzen.

4. Verfahren nach Anspruch 3, bei dem der Schritt (e) den Schritt beinhaltet, das interne Freigabe-Kennzeichenbit des ausgewählten freigegebenen Nachrichten-Knotens zu löschen.

5. Verfahren nach Anspruch 4, bei dem der Schritt (c) die Ermittlung der freigegebenen Knoten beinhaltet, die ein Besetzt-Signal aktiviert haben, was anzeigt, daß der freigegebene Knoten eine Nachricht senden möchte.

6. Verfahren nach Anspruch 1, bei dem der Schritt (d) den Schritt beinhaltet, eine Priorität zu vergleichen, die von jedem freigegebenen Nachrichten-Knoten geltend gemacht wurde, und den freigegebenen Nachrichten-Knoten auszuwählen, der eine höchste Priorität geltend gemacht hat.

7. Verfahren nach Anspruch 1, bei dem der Schritt (a) den Schritt beinhaltet, in jedem Knoten ein internes Freigabe-Kennzeichenbit in jedem Knoten zu setzen.

8. Verfahren nach Anspruch 7, bei dem der Schritt (e) den Schritt beinhaltet, das interne Freigabe-Kennzeichenbit des ausgewählten freigegebenen Nachrichten-Knotens zu löschen.

9. Verfahren nach Anspruch 1, bei dem der Schritt (c) die Ermittlung der freigegebenen Knoten beinhaltet, die ein Besetzt-Signal aktiviert haben, was anzeigt, daß der freigegebene Knoten eine Nachricht senden möchte.

10. Verfahren nach Anspruch 1, bei dem der Schritt (d) den Vergleich eines Prioritäts-ldentifikationsbits, das von jedem freigegebenen Nachrichten-Knoten aktiviert wurde, sowie die Auswahl eines freigegebenen Nachrichten-Knotens beinhaltet, der ein entsprechendes Prioritäts-ldentifikationsbit aktiviert hat, das unter den aktivierten Prioritäts-ldentifikationsbits eine höchste Priorität aufweist.

11. Verfahren nach Anspruch 1, bei dem der erste Zeitraum ungefähr 800 nsec und der zweite Zeitraum ungefähr 1600 nsec dauert.

12. Vorrichtung zur Implementierung einer dezentralisierten Arbitration in einem Bussystem mit einem Bus (10) und einer Vielzahl von mit dem Bus gekoppelten Knoten (12, 14, 16, 18), wobei jeder Knoten eine vorgegebene Priorität aufweist, und wobei die Vorrichtung eine Vielzahl von Arbitrations-Einrichtungen (20, 22, 24, 26) umfaßt, wobei für jeden Knoten (12, 14, 16, 18) eine vorgesehen und mit dem Bus (10) gekoppelt ist, wobei jede Arbitrations-Einrichtung folgendes aufweist:
eine Einrichtung zur Selbst-Freigabe des der Arbitrations-Einrichtung entsprechenden Knotens für die Arbitration;
eine Einrichtung zur Überwachung des Busses (10), um einen Bus-Freizustand zu detektieren, und zur Messung eines Zeitraums, der verstrichen ist, nachdem der Bus in den Bus-Freizustand eingetreten ist;
eine Einrichtung, um zu ermitteln, ob der der Arbitrations-Einrichtung (20, 22, 24, 26) entsprechende Knoten (12, 14, 16, 18) ein freigegebener Nachrichten-Knoten ist, wobei ein freigegebener Nachrichten-Knoten ein freigegebener Knoten ist, der auf dem Bus (10) eine Nachricht senden möchte;
eine Einrichtung, um mit anderen Arbitrations-Einrichtungen zu interagieren, wenn der der Arbitrations-Einrichtung entsprechende Knoten ein freigegebener Nachrichten-Knoten ist, um einen freigegebenen Nachrichten-Knoten zu arbitrieren und auszuwählen, nachdem der Bus (10) sich über einen ersten Zeitraum hinweg im Bus-Freizustand befunden hat, so daß der freigegebene Nachrichten-Knoten, der unter den freigegebenen Nachrichten-Knoten die höchste im voraus festgelegte Priorität aufweist, ausgewählt wird, um den Bus (10) zu benutzen; und
eine Einrichtung zur Selbst-Sperrung des der Arbitrations-Einrichtung entsprechenden Knotens für der Arbitration, sobald der Knoten ausgewählt ist;
wobei die Freigabe-Einrichtung auf den Bus anspricht, der sich über einen zweiten Zeitraum hin, der länger ist als der erste Zeitraum, in einem Freizustand befindet, um den der Arbitrations-Einrichtung entsprechenden Knoten für die Arbitration freizugeben, während die Vielzahl der Knoten sowie der Bus aktiv und stabil sind.

13. Computersystem, das folgendes aufweist:
(a) einen Bus (10);
(b) eine Vielzahl von mit dem Bus gekoppelten Knoten (12, 14, 16, 18);
(c) wobei jeder Knoten aus der Vielzahl der Knoten (12, 14, 16, 18) folgendes aufweist:
(i) eine Freigabe-Einrichtung (28, 30, 32, 34) zur gesteuerten Freigabe bzw. Sperrung des Knotens für die Arbitration, wobei die Freigabe-Einrichtung den Knoten freigibt, wenn dieser Knoten eine Nachricht auf dem Bus senden möchte;
(ii) eine Überwachungs-Einrichtung (28, 30, 32, 34), um den Bus (10) im Hinblick auf einen Bus-Freizustand zu überwachen; und
(iii) eine Arbitrations-Einrichtung (20, 22, 24, 26), die anspricht, wenn die Überwachungs-Einrichtung einen Bus-Freizustand anzeigt, der über einen ersten Zeitraum hinweg auf dem Bus existiert, um zu ermitteln, ob
1) der Knoten für die Arbitration freigegeben ist, und ob
2) der Knoten unter allen mit dem Bus gekoppelten freigegebenen Knoten eine höchste vorgegebene Priorität aufweist und eine Nachricht auf dem Bus (10) senden möchte;
(iv) wobei die Arbitrations-Einrichtung, die dazu ausgelegt ist, die Steuerung des Busses (10) zu übernehmen, wenn der Knoten die höchste vorgegebene Priorität aufweist, für die Arbitration freigegeben ist und eine Nachricht auf dem Bus (10) senden möchte;
(v) wobei die Freigabe-Einrichtung dazu dient, den Knoten in dem Fall für die Arbitration zu sperren, in dem der Knoten die Steuerung des Busses übernimmt;
(vi) wobei die Überwachungs-Einrichtung anzeigt, wenn auf dem Bus über einen zweiten Zeitraum hinweg ein Bus-Freizustand existiert hat, wobei der zweite Zeitraum länger ist als der erste Zeitraum; und
(vii) wobei die Freigabe-Einrichtung auf das Anzeigen des zweiten Zeitraums anspricht, um den Knoten für die Arbitration freizugeben.

## Revendications

1. Procédé de sélection d'un noeud particulier parmi une multiplicité de noeuds couplés à un bus, chaque noeud ayant une priorité prédéterminée, pour permettre audit noeud particulier d'utiliser le bus, et pour valider la multiplicité de noeuds, une fois que chacun des noeuds a eu l'occasion d'utiliser le bus, pour permettre une sélection subséquente d'un noeud particulier, ledit procédé comportant les étapes consistant:
a. à valider en vue d'un arbitrage chacun desdits noeuds (12, 14, 16, 18) ayant un message à envoyer sur le bus (10), ladite validation étant exécutée par chaque noeud (12, 14, 16, 18) lui-même;
b. à contrôler le bus (10) pour détecter un état d'inactivité du bus;
c. à déterminer lesquels desdits noeuds (12, 14, 16, 18) sont des noeuds détenteurs de message validés;
d. à arbitrer entre lesdits noeuds détenteurs de message validés une fois que le bus (10) s'est trouvé en état d'inactivité de bus pendant une première période de temps, à sélectionner ledit noeud détenteur de message validé ayant la priorité prédéterminée la plus élevée parmi lesdits noeuds détenteurs de message validés pour l'utilisation du bus:
e. à invalider en vue de l'arbitrage ledit noeud détenteur de message validé sélectionné, ladite invalidation étant exécutée par chaque noeud détenteur de message validé sélectionné lui-même;
f. à répéter les étapes b, c, d et e jusqu'à ce que tous lesdits noeuds détenteurs de message validés aient été invalidés en vue de l'arbitrage; et
g. à valider ensuite tous lesdits noeuds (12, 14, 16, 18) en vue de l'arbitrage lorsque le bus s'est trouvé dans un état d'inactivité de bus pendant une seconde période de temps qui est plus longue que la première période de temps, pendant que la multiplicité de noeuds et ledit bus sont en fonctionnement et stables.

2. Procédé selon la revendication 1, comportant en outre une étape consistant à contrôler le temps s'écoulant après l'entrée du bus dans l'état d'inactivité de bus.

3. Procédé selon la revendication 1, dans lequel l'étape (a) comprend une étape consistant à mettre à 1 un drapeau de validation interne dans chaque dit noeud.

4. Procédé selon la revendication 3, dans lequel l'étape (e) comprend une étape consistant à mettre à 0 ledit drapeau de validation interne dudit noeud détenteur de message validé sélectionné.

5. Procédé selon la revendication 4, dans lequel l'étape (c) comprend la détermination de ceux desdits noeuds validés qui ont activé un signal d'occupation qui indique que ledit noeud validé a un message à envoyer.

6. Procédé selon la revendication 1, dans lequel l'étape (d) comprend la comparaison d'une priorité revendiquée par chaque dit noeud détenteur de message validé, ainsi que la sélection dudit noeud détenteur de message validé qui a revendiqué la priorité la plus élevée.

7. Procédé selon la revendication 1, dans lequel l'étape (a) comprend une étape consistant à mettre à 1 un drapeau de validation interne dans chaque dit noeud.

8. Procédé selon la revendication 7, dans lequel l'étape (e) comprend une étape consistant à mettre à 0 ledit drapeau de validation interne dudit noeud détenteur de message validé sélectionné.

9. Procédé selon la revendication 1, dans lequel l'étape (c) comprend la détermination de ceux desdits noeuds validés qui ont activé un signal d'occupation qui indique que ledit noeud validé a un message à envoyer.

10. Procédé selon la revendication 1, dans lequel l'étape (d) comprend la comparaison d'un bit d'identification de priorité activé par chaque dit noeud détenteur de message validé, ainsi que la sélection d'un noeud détenteur de message validé qui a activé un bit d'identification de priorité correspondant qui a la priorité la plus élevée parmi les bits d'identification de priorité activés.

11. Procédé selon la revendication 1, dans lequel ladite première période de temps est d'environ 800 ns, et ladite seconde période de temps est d'environ 1600 ns;

12. Appareil destiné à mettre en oeuvre un arbitrage décentralisé dans un système de bus, ayant un bus (10) et une multiplicité de noeuds (12, 14, 16, 18) couplés au bus, chaque noeud ayant une priorité prédéterminée, l'appareil comportant une multiplicité de dispositifs d'arbitrage (20, 22, 24, 26), l'un d'entre eux étant prévu pour chaque noeud (12, 14, 16, 18) et étant couplé au bus (10), chaque dispositif comportant:
des moyens pour assurer l'auto-validation du noeud correspondant au dispositif d'arbitrage en vue de l'arbitrage;
des moyens pour contrôler le bus (10) pour détecter un état d'inactivité de bus et pour mesurer une durée de temps s'écoulant après l'entrée du bus dans l'état d'inactivité de bus;
des moyens pour déterminer si le noeud (12, 14, 16, 18) correspondant au dispositif d'arbitrage (20, 22, 24, 26) est un noeud détenteur de message validé, un noeud détenteur de message validé étant un noeud validé qui a un message à envoyer sur le bus (10);
des moyens d'interaction avec d'autres dispositifs d'arbitrage lorsque le noeud correspondant au dispositif d'arbitrage est un noeud détenteur de message pour effectuer un arbitrage et pour sélectionner un noeud détenteur de message validé une fois que le bus (10) a été en état d'inactivité de bus pendant une première période de temps, de sorte que le noeud détenteur de message validé ayant la priorité prédéterminée la plus élevée parmi les noeuds détenteurs de message validés soit sélectionné en vue de l'utilisation du bus (10); et
des moyens pour assurer l'auto-invalidation, en vue de l'arbitrage, du noeud qui correspond au dispositif d'arbitrage une fois que le noeud a été sélectionné;
lesdits moyens de validation réagissant au fait que le bus s'est trouvé en état d'inactivité pendant une seconde période de temps qui est plus longue que la première période de temps en validant, en vue de l'arbitrage, le noeud correspondant au dispositif d'arbitrage, pendant que la multiplicité de noeuds et ledit bus sont en fonctionnement et stables.

13. Système informatique comportant:
(a) un bus (10);
(b) une multiplicité de noeuds (12, 14, 16, 18) couplés au bus;
(c) chacun des noeuds de ladite multiplicité de noeuds (12, 14, 16, 18) comportant;
(i) un dispositif de validation (28, 30, 32, 34) pour valider et invalider le noeud en vue de l'arbitrage de façon contrôlable, ledit dispositif de validation validant ledit noeud si ledit noeud a un message à envoyer sur le bus;
(ii) un dispositif de contrôle (28, 30, 32, 34) pour contrôler le bus (10) pour détecter la présence d'un état d'inactivité de bus; et
(iii) un dispositif d'arbitrage (20, 22, 24, 26), réagissant au fait que ledit dispositif signale une condition d'inactivité de bus qui a subsisté sur le bus pendant une première période de temps, afin de déterminer:
(1) si le noeud est validé en vue de l'arbitrage, et,
(2) si le noeud a la priorité prédéterminée la plus élevée parmi tous les noeuds validés couplés au bus et tentant d'envoyer un message sur le bus (10);
(iv) le dispositif d'arbitrage étant adapté pour prendre le contrôle du bus (10) lorsque le noeud a la priorité prédéterminée la plus élevée, est validé en vue de l'arbitrage et a un message a envoyer sur le bus (10);
(v) le dispositif de validation agissant pour désactiver le noeud en vue de l'arbitrage dans le cas où le noeud prend le contrôle du bus;
(vi) le dispositif de contrôle signalant le fait qu'un état d'inactivité de bus a subsisté au niveau du bus pendant une seconde période de temps, la seconde période de temps étant plus longue que la première période de temps; et
(vii) le dispositif de validation réagissant à la signalisation de la seconde période de temps en validant le noeud en vue de l'arbitrage.
